# EUROPÄISCHE PATENTANMELDUNG

(11) **EP 1 958 794 A1**
(43) Veröffentlichungstag der Anmeldung: **20.08.2008**
(21) Anmeldenummer: 07102552.2
(22) Anmeldetag: 16.02.2007
(51) Int. Cl.: B60B 33/02, B60B 33/04, A61G 5/06

(54) **Schwenkrolle**

(71) Anmelder: Reha-Hunziker AG, 3612 Steffisburg (CH)
(72) Erfinder: Hunziker, Kurt, CH-3612, Steffisburg (CH)
(74) Vertreter: Fischer, Franz

(57) **Zusammenfassung**

Die Schwenkrolle (1) für Transportmittel und insbesondere für Rollstühle weist eine schwenkbare Gabel auf, die eine erste im Wesentlichen vertikale Achse (2) zur schwenkbaren Befestigung der Schwenkrolle (1) am Rahmen (7) des Transportmittels und an der schwenkbaren Gabel mindestens eine Rolle (3) aufweist. Die Schwenkrolle (1) richtet sich bei einer Fahrbewegung in die Fahrrichtung aus. Ihre Gabel besteht aus einem ersten (6) und einem zweiten Gabelteil (8). Die beiden Gabelteile sind durch eine zweite im wesentlichen vertikale Achse (9), begrenzt schwenkbar verbunden. Die Rolle oder die Rollen (3) sind am zweiten Gabelteil (8) um eine horizontale Drehachse (4) rotierbar angeordnet. Die zweite vertikale Achse (9) liegt zwischen der ersten vertikalen (2) Achse und der Drehachse (4) der Rolle(n) (3), wobei sich die zweite vertikale Schwenkachse (9) hinter der ersten Schwenkachse (2), bezogen auf die Fahrrichtung befindet.

Die erfindungsgemässe Doppelachsanordnung der Schwenkrolle vermeidet oder vermindert das Flattern der Rolle, was eine sicherere und komfortablere Fortbewegung des Transportmittels erlaubt.

## Beschreibung

Die vorliegende Erfindung bezieht auf eine Schwenkrolle für ein Transportmittel, wie einen Rollstuhl oder einen Rollwagen.

Schwenkrollen bestehen in der Regel aus einer an einer vertikalen Achse dreh- oder schwenkbar gelagerten Gabel, in welcher eine Rolle angeordnet ist. Ein Beispiel einer derartigen Schwenkrolle ist beispielsweise in der WO00/46046 beschrieben. Solche Schwenkrollen haben eine Stützfunktion und erlauben, dass ein damit ausgestattetes Transportmittel leicht lenkbar ist. Auf glattem oder ebenem Untergrund erfüllen die bekannten Schwenkrollen, wie sie für Rollstühle oder andere Transportmittel zur Anwendung kommen, ihren Verwendungszweck meistens problemlos. Sind jedoch Hindernisse auf dem Untergrund vorhanden, ist der Untergrund uneben, oder besitzen die Rollen eine Unwucht, so hat dies zur Folge, dass Schwenkrollen durch ein Hindernis ungewollte Schwenkbewegungen ausführen, wenn das durch sie getragene oder gestützte Transportmittel in Bewegung versetzt wird. Je nach der Geschwindigkeit beginnt die Schwenkrolle zu schwingen oder zu flattern, was die Handhabung des Transportmittels beeinträchtigt und zu einer erhöhten Abnutzung der Räder führt. Dieses Problem wurde dadurch gelöst, dass Gleitlager für die vertikale Achse zum Einsatz kamen, welche durch einen genügenden Widerstand die auftretenden Schwingungen abbauen sollten, oder dass ein Einrastmittel die Rolle für den Geradeauslauf stabilisierte. Diese Lösungen des Problems beeinträchtigen die Lenkbarkeit und die Manövrierbarkeit eines damit ausgestatten Transportmittels.

Es ist somit Aufgabe der vorliegenden Erfindung eine Schwenkrolle zur Verfügung zustellen, die frei von den oben beschriebenen Problemen ist.

Es wurde gefunden, dass die obige Aufgabe durch die erfindungsgemässe Schwenkrolle gelöst werden kann, die im Patentanspruch 1 definiert ist.

Die erfindungsgemässe Schwenkrolle umfasst eine zweiteilige Gabel die eine erste Drehachse aufweist, die durch einen Gabelzapfen mit einem Kugel- Rollen- oder Gleitlager am oder im Rahmen eines Transportmittels, wie eines Rollstuhls, gelagert ist. Die Gabel besitzt neben der ersten Drehachse der Gabel noch eine zweite Drehachse mit einem begrenzten Schwenkbereich, die sich zwischen der horizontalen Rollenachse und Drehachse der Gabel befindet. Die erste und die zweite Drehachse sind vertikal oder im Wesentlichen vertikal bezüglich der Auflagefläche der Rolle ausgerichtet. Unter "im Wesentlichen vertikal" wird verstanden, dass die Drehachse eine Neigung (β) bezüglich der Vertikalen von +/- 0° bis 12° aufweist, wobei die geneigte Achse bevorzugt in einer Ebene liegt, die einerseits durch eine vertikale Achse und anderseits durch die Geradeaus-Fahrrichtung des Transportmittels definiert ist.

Durch die zweite Achse kann überraschenderweise erreicht werden, dass bei einer relativ schnellen Vorwärtsbewegung eines mit Schwenkrollen ausgestatteten Transportmittels die Schwingungen der Masse der Schwenkrollen wesentlich reduziert werden können, was ihr unerwünschtes Flattern vermeidet. Die zweite Achse mit einem begrenzten Schwenkbereich kann mit einer gedämpften Lagerung versehen werden.

Obschon die erfindungsgemässe Konstruktion eine kurzfristige Schwingung nicht verhindert, bewirkt sie jedoch einen wirksamen Abbau der der Pendelbewegung. Die schwingende Masse welche ansonsten die Pendelbewegung beibehält, ist durch die zweite Achse entkoppelt und schwingt verzögert oder sogar entgegengesetzt von der sonst auftretenden Schwingungsrichtung, bis sie abgebaut ist. Dabei kann sich die Schwenkgabel innert kürzester Zeit selber stabilisieren, ohne dass die Geschwindigkeit verringert werden muss.

Figurenliste
Fig. 1 und 2 zeigen zwei verschiedene perspektivische Darstellungen eines erfindungsgemässen Zweiachsen-Schwenkrads mit Doppelrädern und einer klassischen Achsversion.
Fig. 3 und 4 zeigen das Schwenkrad gemäss Fig. 1 und 2, von unten, wobei der zweite Gabelteil geradeaus gerichtet bzw. ausgeschwenkt ist.
Fig. 5 und 6 zeigen verschiedene perspektivische Darstellungen eines erfindungsgemässen Zweiachsen-Schwenkrads mit Doppelrädern mit zwei Kugelgelenken die eine Schwenkachse ausbilden.
Fig. 7 und 8 zeigen das Schwenkrad gemäss Fig. 5 und 6, von unten, wobei der zweite Gabelteil geradeaus gerichtet bzw. ausgeschwenkt ist.
Fig. 9 und 10 zeigen verschiedene perspektivische Darstellungen eines erfindungsgemässen Zweiachsen-Schwenkrads mit Doppelrädern wobei die Schwenkachse durch zwei Elastomerstränge ausgebildet ist.
Fig. 11 und 12 zeigen das Schwenkrad gemäss Fig. 9 und 10, von unten, wobei der zweite Gabelteil geradeaus gerichtet bzw. ausgeschwenkt ist.
Fig. 13 zeigt verschiedene perspektivische Darstellungen eines erfindungsgemässen Zweiachsen-Schwenkrads mit Doppelrädern, wobei die Schwenkachse eine durch ein ROSTA®-Element gedämpfte Achse ist.
Fig. 14 und15 zeigen das Schwenkrad gemäss Fig. 13, von unten, wobei der zweite Gabelteil geradeaus gerichtet bzw. ausgeschwenkt ist.
Fig. 16 stellt eine perspektivische Darstellung eines erfindungsgemässen Schwenkrads mit einem Einfachrad dar.
Fig. 17 zeigt den Seitenriss des Schwenkrades gemäss Fig. 16.
Fig. 18 zeigt eine Unteransicht des Schwenkrades gemäss Fig. 16, jedoch ohne Rad.
Fig. 19 zeigt ein perspektivische Ansicht einer Ausführungsform einer Schwenkrolle mit Steigrad.
Fig. 20 zeigt eine Unteransicht der Schwenkrolle gemäss Fig. 8 mit gerade ausgerichteten Doppelrollen.
Fig. 21 ist eine analoge Ansicht wie in Fig. 10, jedoch mit geschwenktem Gabelteil mit den Doppelrollen.
Fig. 22 stellt eine perspektivische Darstellung einer weiteren Ausführungsform eines erfindungsgemässen Schwenkrads mit einem Einfachrad dar.
Fig. 23 und 24 zeigen das Schwenkrad gemäss Fig. 22, von unten, wobei der zweite Gabelteil geradeaus gerichtet bzw. ausgeschwenkt ist.

Die erfindungsgemässe Schwenkrolle umfasst einen zweiteiligen Gabelteil, der eine erste Schwenkachse, die der Steuerung des damit ausgestatteten Transportmittels dient und eine zweite Schwenkachse mit einem begrenzten Schwenkbereich besitzt. Die Schwenkachsen sind in der Regel vertikal ausgerichtet, wobei die erste Schwenkachse die Gabel der Schwenkrolle mit dem Rahmen des Transportmittels verbindet und die zweite Schwenkachse die beiden Gabelteile verbindet, wobei der Schwenkbereich der beiden Gabelteile begrenzt ist und vorzugsweise im Winkelbereich von ± 10° liegt. Die Schwenkbewegung der zweiten Achse kann gedämpft werden, z.B. durch ein entsprechendes Gleitlager, ein Torsions-Gummifederelement (= Rosta-Element erhältlich bei der Firma ROSTA AG, CH-5502 Hunzenschwil, Schweiz). Die Schwenkbarkeit des zweiten Gabelteils um die zweite Achse kann auch durch andere Mittel als eine mechanische Achse verwirklicht werden, z.B. durch eine Blattfeder, welche die beiden Gabelteile verbindet, durch mindestens zwei Kugelgelenke, welche eine begrenzte Drehachse definieren, oder durch Elastomer-Elemente oder Elastomerstränge, durch welche der zweite Gabelteil mit dem ersten Gabelteil verbunden ist und eine begrenzte und gedämpfte Schwenkbewegung, insbesondere des zweiten Gabelteils zulassen.

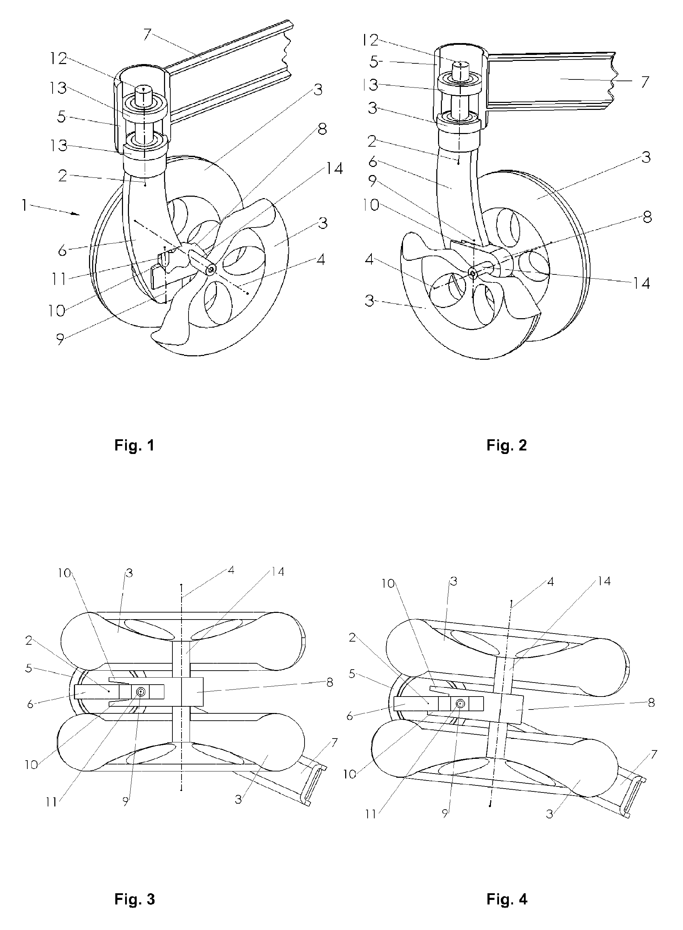

Die Fig. 1 und 2 zeigen zwei perspektivische Darstellungen eines erfindungsgemässen Zweiachsen-Schwenkrads 1 mit Doppelrädern 3. Die Schwenkrolle ist über einen Lagerbolzen 12 in einer Lagerhülse 5 am Rahmen 7 eines Rollstuhls oder eines andern Transportmittels um eine Schwenkachse 2 dreh- und schwenkbar befestigt. Der Lagerbolzen 12 ist in der Lagerhülse 5 durch Kugellager oder Walzenlager 13 gelagert. Weiter sind der erste Gabelteil 6, der zweiteiligen Gabel und die Doppelräder 3 sichtbar, die an der Radachse 14 um die Drehachse 4 rotierbar befestigt sind. Eines der Doppelräder 3 ist als Teilansicht dargestellt, was die Konstruktion des zweiten Gabelteils 8 und der Anordnungen der vertikalen Schwenkachse 9 in der Bohrung 11 und der horizontalen Radachse 14 sichtbar macht. Der zweite Gabelteil 8 ist bezüglich dem ersten Gabelteil 6 begrenzt schwenkbar.

Fig. 3 und 4 zeigen Unteransichten des Schwenkrads 1 gemäss Fig. 1 und 2. Die Bezugszeichen beziehen sich auf entsprechende Definitionen von Fig. 1 und 2. Die Gabelteile 6 und 8 sind durch die zweite vertikale Achse 9 in der Bohrung 11 verbunden. Der Gabelteil 8 ist um die Achse 9 begrenzt schwenkbar angeordnet, wobei die mechanischen Begrenzungsnocken 10, die in den zweiten Gabelteil 8 integriert sind, für die Begrenzung der Schwenkung verantwortlich sind. Der zweite Gabelteil 8 enthält in einer horizontalen Bohrung die Radachse 14 für die geeignet gelagerten Doppelräder 3, die um die Achse 4 rotierbar sind.

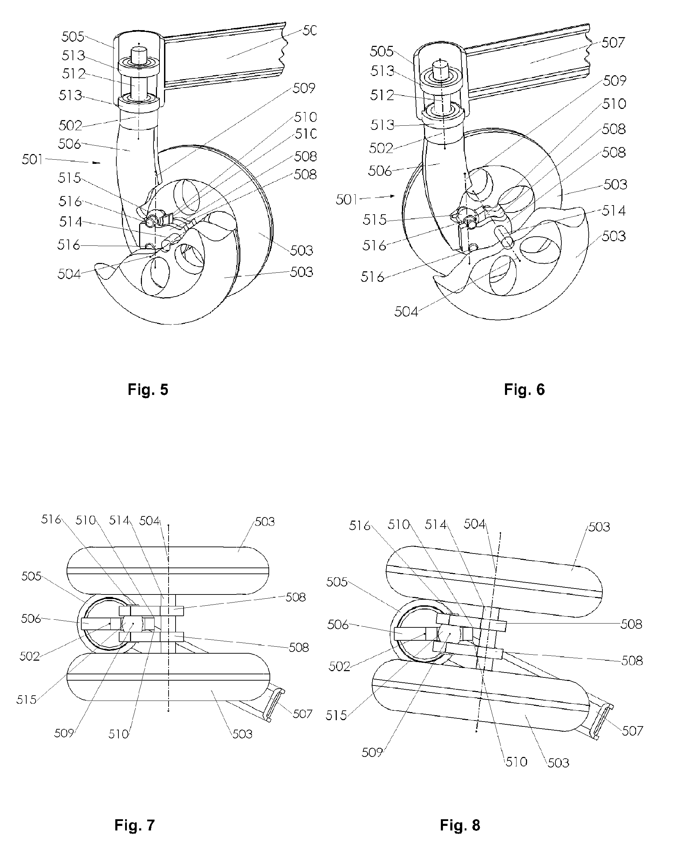

Die Fig. 5 und 6 zeigen zwei perspektivische Darstellungen eines erfindungsgemässen Zweiachsen-Schwenkrads 501 mit Doppelrädern 503. Die Schwenkrolle ist über einen im Wesentlichen vertikalen Lagerbolzen 512 in einer Lagerhülse 505 am Rahmen 507 eines Rollstuhls oder eines andern Transportmittels um eine Schwenkachse 502 um die dreh- und schwenkbar befestigt. Der Lagerbolzen 512 ist in der Lagerhülse 505 durch Kugel- oder Walzenlager 513 gelagert. Weiter sind der erste Gabelteil 506 der zweiteiligen Gabel und die Doppelräder 503 dargestellt, die an der Radachse 514 um die Drehachse 504 rotierbar befestigt sind. Eines der Doppelräder 503 wird als Teilansicht gezeigt, was die Konstruktion des zweiten doppelteiligen Gabelteils 508 und der Anordnungen der Kugelgelenke aus Kugelteil 515 und Gelenkachse 516, welche ein vertikale Drehachse 509 bilden, und die horizontale Radachse 504 sichtbar macht. Der erste Gabelteil 506 weist einen Begrenzungsnocken 510 auf, der innerhalb des doppelteiligen Gabelteils 508 für die die Begrenzung der Schwenkung sorgt.

Fig. 7 und 8 zeigen Unteransichten des Schwenkrads 501 gemäss Fig. 5 und 6. Die Bezugszeichen beziehen sich auf entsprechende Definitionen von Fig. 5 und 6. Die Gabelteile 506 und 508 sind durch die beiden vertikal übereinander liegenden Kugelgelenke 515, 516 drehbar um eine vertikale Achse 509 verbunden. Dadurch ist der Gabelteil 508 um die Achse 509 begrenzt schwenkbar befestigt, wobei die Begrenzung des Drehwinkels durch die den Drehwinkel der Kugelgelenke und den Begrenzungsnocken 510 gegeben ist. Der zweite doppelte Gabelteil 508 enthält in einer horizontalen Bohrung die Radachse 514 für die geeignet gelagerten und um die Achse 504 rotierbaren Doppelräder 503.

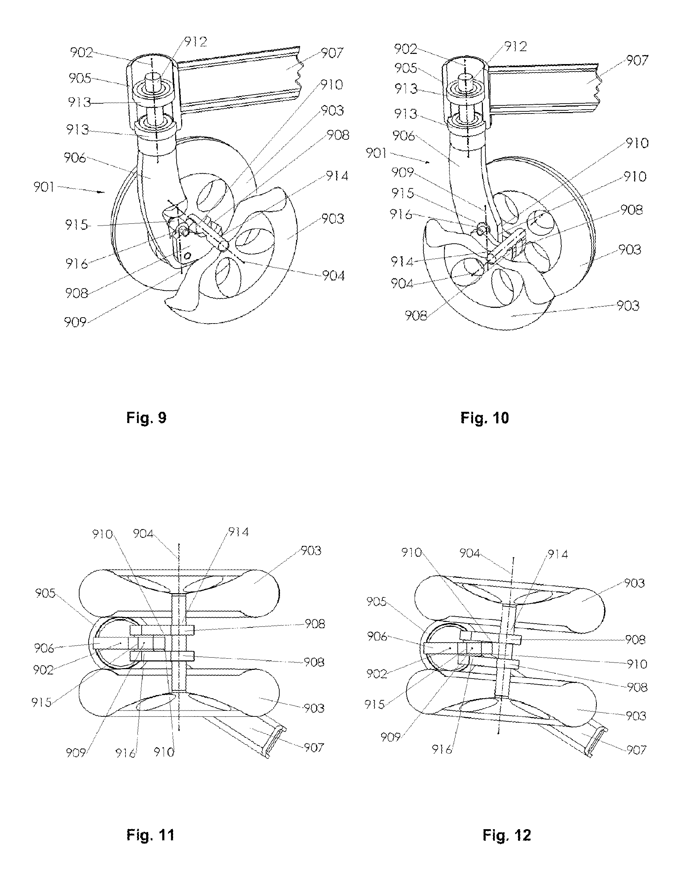

Fig. 9 und 10 zeigen zwei perspektivische Darstellungen eines erfindungsgemässen Zweiachsen-Schwenkrads 901 mit Doppelrädern 903. Die Schwenkrolle ist an einem im Wesentlichen vertikal ausgerichteten Lagerbolzen 912 in einer Lagerhülse 905 am Rahmen 907 eines Rollstuhls oder eines andern Transportmittels um die Achse 902 dreh- und schwenkbar befestigt. Die Schwenkachse 902 wird durch den Lagerbolzen 912 definiert, der in der Lagerhülse 905 durch Kugellager 913 oder dergleichen gelagert ist. Weiter sind der erste Gabelteil 906 der zweiteiligen Gabel und die Doppelräder 903 sichtbar, die an der Radachse 904 rotierbar befestigt sind. Eines der Doppelräder 903 ist als Teilansicht dargestellt, was die Konstruktion des zweiten doppelten Gabelteils 908 und der Anordnungen von zwei übereinander liegenden, horizontal ausgerichteten Elastomerstränge 916 sichtbar macht. Am ersten Gabelteil 906 dienen die Kanten 910 innerhalb des doppelten Gabelteils 908 zur Begrenzung der Schwenkbewegung des zweiten doppelten Gabelteils 908 bezüglich des ersten Gabelteils 906.

Fig. 11 und 12 zeigen Unteransichten des Schwenkrads 901 gemäss Fig. 9 und 10. Die Bezugszeichen beziehen sich auf entsprechende Definitionen von Fig. 9 und 10. Die Gabelteile 906 und 908 sind durch die beiden vertikal übereinander liegenden Elastomerstränge 916 drehbar um eine vertikale Drehachse 909 begrenz schwenkbar verbunden. Dadurch ist der Gabelteil 908 um die Achse 909 begrenzt schwenkbar befestigt, wobei die Begrenzung des Drehwinkels durch die Anordnung der Elastomerstränge 916 am ersten und zweiten Gabelteil 906, 908 und durch die Kanten 910 gegeben ist. Der zweite Gabelteil 908 enthält in einer horizontalen Bohrung die Radachse 904 für die geeignet gelagerten und um die Drehachse 904 rotierbaren Doppelräder 903.

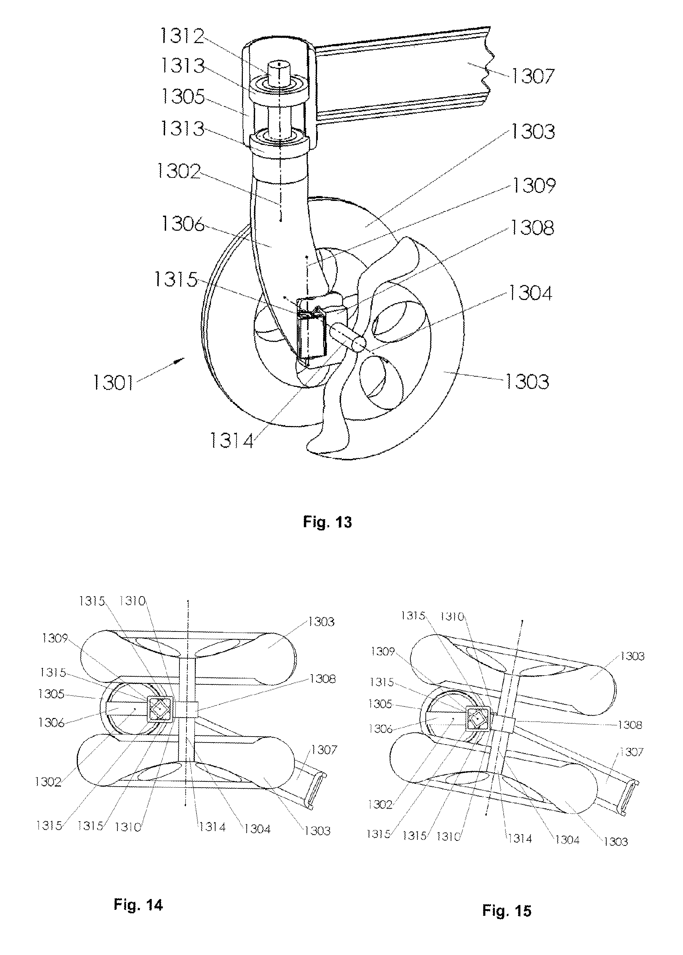

Fig. 13 zeigt eine perspektivische Darstellung eines erfindungsgemässen Zweiachsen-Schwenkrads 1301 mit Doppelrädern 1303. Die Schwenkrolle ist an einem im Wesentlichen vertikalen Lagerbolzen 1312 in einer Lagerhülse 1305 am Rahmen 1307 eines Rollstuhls oder eines andern Transportmittels um die Schwenkachse 1302 dreh- und schwenkbar befestigt. Der Lagerbolzen 1312 ist in der Lagerhülse 1305 durch Kugel- oder Walzenlager 1313 gelagert. Weiter sind der erste Gabelteil 1306 der zweiteiligen Gabel und die Doppelräder 1303 sichtbar, die an der Radachse 1314 um eine Drehachse 1304 rotierbar befestigt sind. Eines der Doppelräder 1303 ist als Teilansicht dargestellt, was die Konstruktion des zweiten Gabelteils 1308 und die Anordnung der durch ein ROSTA ®-Element 1315 gedämpften Schwenkachse 1309 und die horizontale Radachse 1314 mit der Drehachse 1304 sichtbar macht.

Fig. 14 und 15 zeigen Unteransichten des Schwenkrads 1301 gemäss Fig. 13. Die Bezugszeichen beziehen sich auf entsprechende Definitionen von Fig. 13. Die Gabelteile 1306 und 1317 sind durch die mit einem ROSTA ®-Element gedämpften Drehachse 1309 verbunden. Dadurch ist der Gabelteil 1308 um die Achse 1309 begrenzt und gedämpft schwenkbar befestigt, wobei die Begrenzung des Drehwinkels durch das ROSTA®-Element und die Kanten 1310 des zweiten Gabelteils 1308 gegeben ist. Der zweite Gabelteil 1317 enthält in einer horizontalen Bohrung die Radachse 1314 für die geeignet gelagerten um die Drehachse 1304 rotierbaren Doppelräder 1303.

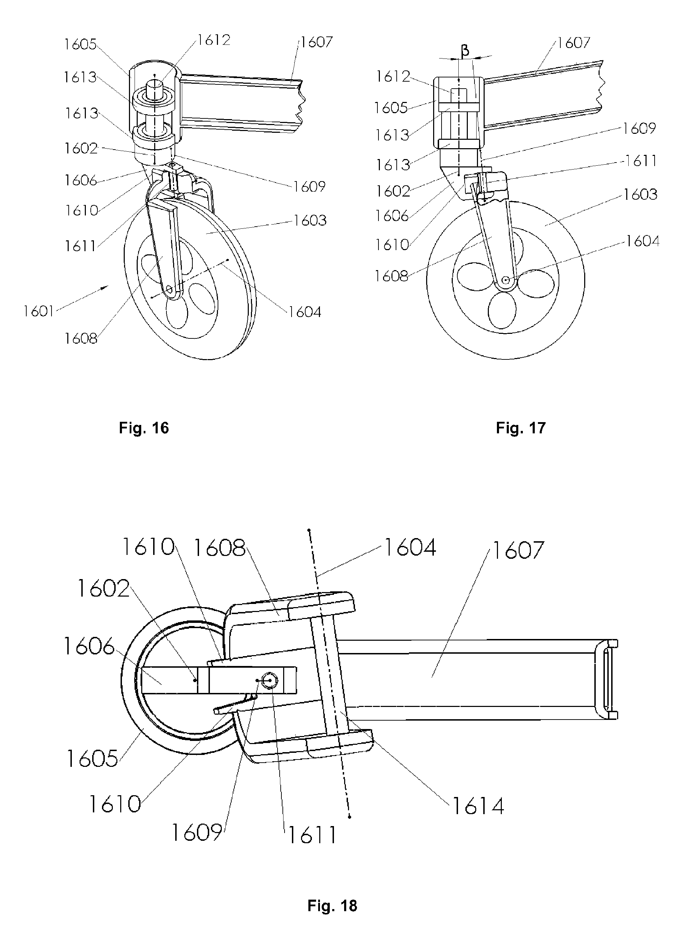

Die Fig. 16 und 17 zeigen zwei perspektivische Darstellungen eines erfindungsgemässen Zweiachsen-Schwenkrads 1601 mit einem Einfachrad 1603. Die Schwenkrolle ist über einen Lagerbolzen 1612, der sich in einer Lagerhülse 1605 befindet, am Rahmen 1607 eines Rollstuhls oder eines andern Transportmittels um eine erste Schwenkachse 1602 dreh- und schwenkbar befestigt. Der Lagerbolzen 1612 ist in der Lagerhülse 1605 durch zwei Kugel- oder Walzenlager 1613 gelagert. Weiter sind der erste Gabelteil 1606 der zweiteiligen Gabel und der zweite Gabelteil 1608 mit den Begrenzungsnocken 1610 dargestellt, wobei die beiden Gabelteile 1606 und 1608 durch die zweite vertikale Achse 1611 verbunden sind. Die im Wesentlichen vertikalen Lagen der ersten Schwenkachse 1602 und der zweiten Schwenkachse 1609 können verschieden sein. In dieser Figur unterscheiden sich die Positionen der beiden Achsen durch einem Winkel β. Dieser Winkel kann zur optimalen Abstimmung eingestellt werden. Der zweite Gabelteil 1608 besitzt zwei Gabelschenkel, in welchen die horizontale Radachse 1614 des um die Drehachse 1604 rotierbaren Einfachrads 1603 gelagert ist.

Fig. 18 zeigt ein Unteransicht der Schwenkrolle gemäss Fig. 16 und 17 in einer ausgeschwenkten Position des zweiten Gabelteils 1608, wobei die Begrenzungsnocken 1610 eine Begrenzung der Schwenkbewegung bewirken. Der besseren Übersicht halber ist die Einfachrolle weggelassen. Die Bezugszeichen entsprechen denjenigen von Fig. 16 und 17. Der zweite Gabelteil 1608 ist durch eine klassische Achse 1611 mit dem ersten Gabelteil 1606 begrenzt schwenkbar befestigt.

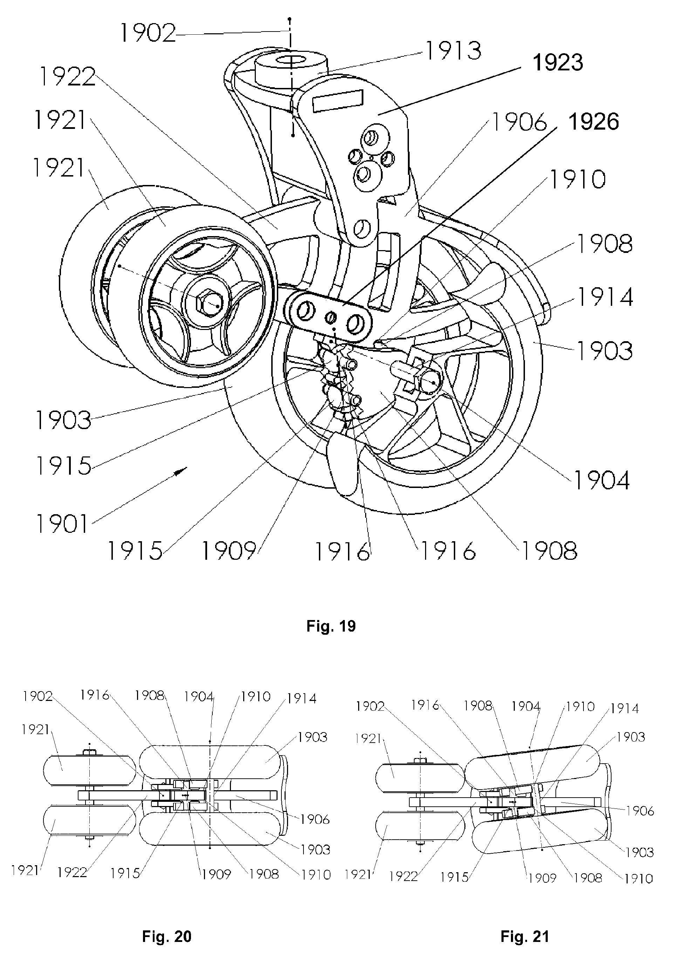

Fig. 19 zeigt ein perspektivische Ansicht einer Aufhängung mit einer Schwenkrolle mit Steigrad, welche eine bevorzugte Ausführungsform der vorliegenden Erfindung darstellt. Die Aufhängung wird über einen im Wesentlichen vertikalen Lagerbolzen (nicht dargestellt), dessen Lage durch eine Schwenkachse 1902 definiert ist, am Rahmen eines Rollstuhls oder an eines andern Transportmittel (nicht dargestellt) angebracht. Der Achsbolzen ist in einer Achshülse 1913 gelagert, die Teil des Gabelkopfes ist. Die Aufhängung besitzt eine tragende Doppelrolle 1903 und ein doppeltes Steigrad 1921, das die Überwindung von Absätzen auf dem zu befahrenden Untergrund erleichtert. Das Steigrad 1921 ist in einer Steigradgabel 1922 und die Doppelrolle in einer zweiteiligen Hauptgabel 1906 und 1908 gelagert. Die Steigradgabel ist mittels einem Verbindungsbalken 1926 mit dem ersten Gabelteil 1906 der Hauptgabel verbunden, derart dass eine synchrone Bewegung möglich ist. Während die Hauptgabel am Gabelkopf an einer horizontalen Achse durch ein ROSTA®-Element gefedert gelagert ist, ist die Steilgradgabel 1922 an einer weiteren, parallelen horizontalen Achse 1922 am Gabelkopf 1923 schwenkbar befestigt. Der Gabelteil 1906 der Hauptgabel ist mit dem um eine durch die beiden Kugelgelenke 1915 definierten Achse 1909 begrenzt schwenkbar mit dem zweiten Gabelteil 1908 verbunden. Die schwenkbare Verbindung der beiden Gabelteile ist durch zwei in Kugelgelenken 1915 gelagerten Bolzen 1916 verwirklicht. Die Schwenkbarkeit verhindert oder reduziert das Flattern der Rollen bei einer bestimmten Geschwindigkeit. Der erste Gabelteil im Sinne der vorliegenden Erfindung wird durch den Gabelkopf und die Gabelteile1906 und 1922 verkörpert.

Fig. 20 zeigt eine Unteransicht der Schwenkrolle gemäss Fig. 19 mit gerade ausgerichteten Doppelrollen. Die Bezugszeichen entsprechen den Definitionen, die in Fig. 20 gegeben sind. Die Achse 1909 zwischen den beiden Gabelteilen 1906 und 1917 ist sichtbar.

Fig. 21 ist eine analoge Ansicht wie in Fig. 20, jedoch mit um die Achse 1909 geschwenktem Gabelteil 1917 mit den Doppelrollen 1903. Die kanten 1910 des ersten Gabelteils 1906 dien der Begrenzung des Schwenkbewegung des zweiten Gabelteils 1908 bezüglich dem ersten Gabelteil 1906.

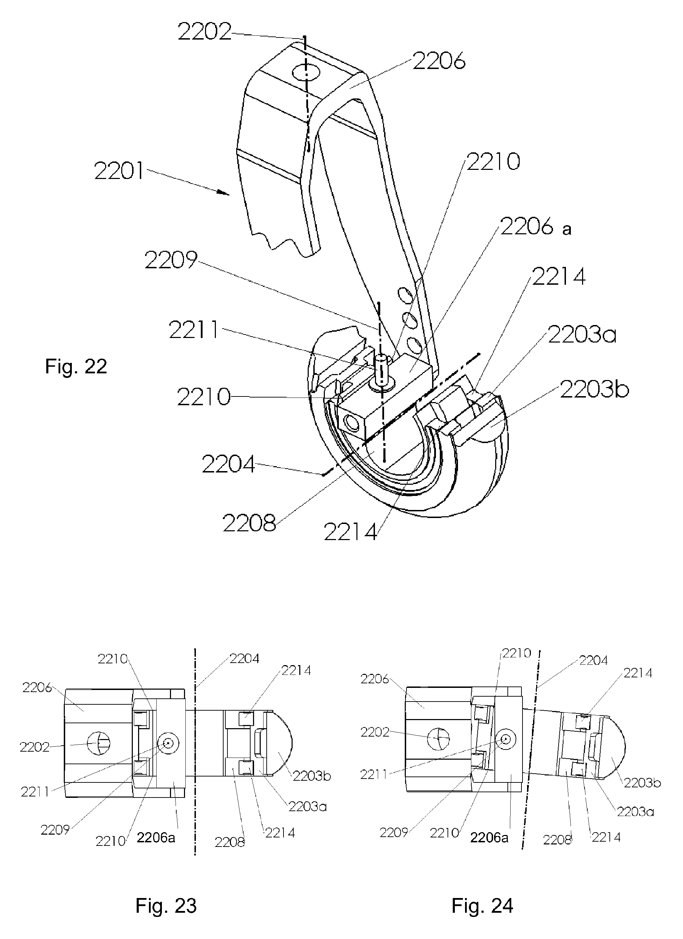

Die Fig. 22 zeigt eine perspektivische Darstellung eines erfindungsgemässen Zweiachsen-Schwenkrads 2201 mit einem Einfachrad bestehend aus einer Felge 2203a und einem Reifen 2203b. Die Schwenkrolle ist, analog wie in Fig. 16 dargestellt, für ihre um eine erste Schwenkachse 2202 dreh- und schwenkbare Befestigung über einen Lagerbolzen (nicht dargestellt), der sich in einer Lagerhülse (nicht dargestellt) befindet, an einem Rahmen (nicht dargestellt) eines Rollstuhls oder eines andern Transportmittels bestimmt. Weiter sind der erste Gabelteil 2206, der zwei Gabelschenkel besitzt, und der zweite Gabelteil in Form eines stationären Rings 2208 mit den Begrenzungskanten 2210 dargestellt, wobei die beiden Gabelteile 2206 und 2208 durch die zweite vertikale Achse 2211 verbunden sind. Die im Wesentlichen vertikalen Lagen der ersten Schwenkachse 2202 und der zweiten Schwenkachse 2209 können verschieden sein. Der zweite Gabelteil in Form eines stationären Rings 2208 ist in die Felge 2203a eingesetzt. Zwischen dem stationären Ring 2208 und der Felge 2203a sind zwei Rollen- oder Kugellager 2214 eingesetzt, derart, dass die Felge 2203a mit dem Reifen 2203b um den stationären Ring 2208 rotierbar ist. Die Drehachse 2204 liegt in Zentrum der Kombination des stationären Rings 2208 und der Felge 2203a. Zwischen den beiden Gabelschenkeln des ersten Gabelteils 2206 ist ein Tragbalken 2206a mit einer vertikalen Bohrung eingesetzt. In dieser Bohrung befindet sich die zweite Schwenkachse 2211. Der stationäre Ring 2208 besitzt auf einer Seite, die eine Verstärkung aufweist, eine Ausnehmung zur Aufnahme des Tragbalkens 2206a. Die zweite Schwenkachse 2209, welche den Tragbalken 2206a durchdringt, ist in zwei Bohrungen in der Ausnehmung im stationären Ring 2203a eingesetzt. Der Tragbalken befindet sich zwischen der Drehachse 2204 und der äusseren Begrenzung der Rolle. Zwischen der Felgenseite der Ausnehmung und dem eingesetzten Tragbalken 2206 ist ein Zwischenraum mit Begrenzungskanten 2210 vorgesehen. Durch diese Anordnung ist der stationäre Ring um die zweite Schwenkachse 2209 bezüglich des Tragbalkens 2206 schwenkbar, wobei die Schwenkbewegung durch die Begrenzungskanten 2210 an der Ausnehmung begrenzt wird.

Die Fig. 23 und 24 zeigen eine Unteransicht der Schwenkrolle gemäss Fig. 22 in einer geraden bzw. ausgeschwenkten Position des zweiten Gabelteils, der die Form eines stationären Rings 2208 aufweist, wobei die Begrenzungskanten 2210 in der Ausnehmung eine Begrenzung der Schwenkbewegung der Rolle um die Schwenkachse 2209 bewirken. Die Bezugszeichen entsprechen denjenigen von Fig. 22. Der durch den stationären Ring 2208 verkörperte zweite Gabelteil definiert die Drehachse 2204, um welche sie rotiert.

## Patentansprüche

1. Schwenkrolle für Transportmittel, insbesondere Rollstühle, bestehend aus einer schwenkbaren Gabel, die eine erste im Wesentlichen vertikale Achse (2) zur schwenkbaren Befestigung der Schwenkrolle (1) am Rahmen (7) des Transportmittels und an der schwenkbaren Gabel mindestens eine Rolle (3) aufweist, damit sich die Schwenkrolle (1) bei einer Fahrbewegung in die Fahrrichtung ausrichtet, **dadurch gekennzeichnet, dass** die schwenkbare Gabel neben einem ersten (6) auch einem zweiten Gabelteil (8) aufweist, der um eine zweite im Wesentlichen vertikale Achse (9), begrenzt schwenkbar mit dem ersten Gabelteil (6) verbunden ist, wobei die mindestens eine Rolle (3) am zweiten Gabelteil (8) um eine horizontale Drehachse (4) rotierbar angeordnet ist, und sich die zweite im Wesentlichen vertikale Achse (9) zwischen der ersten im Wesentlichen vertikalen Achse (2) und der Drehachse (4) der Rolle (3) befindet und die zweite im Wesentlichen vertikale Achse (9) sich hinter der ersten Schwenkachse (2) bezogen auf die Fahrrichtung befindet.

2. Schwenkrolle gemäss Anspruch 1, **dadurch gekennzeichnet, dass** die erste im Wesentlichen vertikale Achse (2) durch einen Gabelzapfen mit entsprechenden Lagern definiert wird.

3. Schwenkrolle gemäss Anspruch 1 oder 2, **dadurch gekennzeichnet, dass** die zweite im Wesentlichen vertikale Achse (9) durch eine Welle verkörpert wird, die den ersten und den zweiten Gabelteil miteinander verbindet.

4. Schwenkrolle nach Anspruch 3, **dadurch gekennzeichnet, dass** die Welle in Kugel- Rollen- oder Gleitlagern gelagert ist.

5. Schwenkrolle nach Anspruch 3 oder 4, **dadurch gekennzeichnet, dass** die Welle durch ein Torsions-Gummifederelement gedämpft schwenkbar ist.

6. Schwenkrolle nach Anspruch 1 oder 2, **dadurch gekennzeichnet, dass** die zweite im Wesentlichen vertikale Achse (9) durch Elastomerverbindungselemente verkörpert wird, die den ersten und den zweiten Gabelteil miteinander verbinden, dass der zweite Gabelteil bezüglich des ersten Gabelteils um eine im Wesentlichen vertikale Achse (9) begrenzt schwenkbar ist.

7. Schwenkrolle nach einem der Ansprüche 2 bis 5, **dadurch gekennzeichnet, dass** die Schwenkbarkeit des zweiten bezüglich des ersten Gabelteils durch mechanische Begrenzungsanschläge (10), die an mindestens einem der Gabelteile angeordnet sind, begrenzt wird.

8. Schwenkrolle nach Anspruch 1, **dadurch gekennzeichnet, dass** der erste und zweite Gabelteil durch eine Blattfeder verbunden sind, derart, dass der erste und zweite Gabelteil um die zweite im Wesentlichen vertikale Achse begrenzt schwenkbar sind.

9. Schwenkrolle nach einem der Ansprüche 1 bis 7, **dadurch gekennzeichnet, dass** sie eine Doppelrolle aufweist.

10. Schwenkrolle nach einem der Ansprüche 1 bis 7, **dadurch gekennzeichnet, dass** sie eine Einfachrolle aufweist.

11. Schwenkrolle nach Anspruch 1, worin der erste Gabelteil (2206) ein oder zwei Gabelschenkel besitzt, der zweite Gabelteil als ein in die Rolle integrierter stationärer Ring (2208) ausgebildet ist, und die beiden Gabelteile (2206) und (2208) durch die zweite im Wesentlichen vertikale Achse (2211) verbunden sind, wobei der zweite Gabelteil, der als stationärer Ring (2208) ausgebildet ist, in die Felge (2203a) der Rolle eingesetzt ist, und zwischen dem stationären Ring (2208) und der Felge (2203a) mindestens ein Rollen- oder Kugellager (2214) eingesetzt ist, derart, dass die Felge (2203a) mit dem Reifen (2203b) um den stationären Ring (2208) rotierbar ist, um eine Drehachse (2204), die in Zentrum der Kombination des stationären Rings (2208) und der Felge (2203a) liegt; am einen oder zwischen den beiden Gabelschenkeln des ersten Gabelteils (2206) ein Tragbalken (2206a) eingesetzt ist, der eine vertikale Bohrung für die Aufnahme der zweiten Schwenkachse (2211) aufweist; der stationäre Ring (2208) auf einer Seite eine Verstärkung aufweist, die eine Ausnehmung zur Aufnahme des Tragbalkens (2206a) besitzt, und die zweite Schwenkachse (2209), welche den Tragbalken (2206a) durchdringt, in zwei Bohrungen in der Ausnehmung im stationären Ring 2203a eingesetzt ist, wobei sich der Tragbalken (2206a) zwischen der Drehachse 2204 und der äusseren Begrenzung der Rolle befindet; und zwischen der Felgenseite der Ausnehmung und dem eingesetzten Tragbalken (2206a) ein Zwischenraum mit Begrenzungskanten (2210) vorgesehen ist, der ein durch die Begrenzungskanten begrenztes Schwenken des als stationärer Ring (2208) ausgebildeten zweiten Gabelteils um die zweite Schwenkachse (2209) bezüglich des ersten Gabelteils (2206) erlaubt.

12. Rollstuhl, **dadurch gekennzeichnet, dass** er mindestens eine Schwenkrolle nach einem der Ansprüche 1 bis 11 enthält.
